# EUROPÄISCHE PATENTSCHRIFT

(11) **EP 1 123 573 B1**
(45) Veröffentlichungstag und Bekanntmachung des Hinweises auf die Patenterteilung: **18.09.2002**
(21) Anmeldenummer: 99953820.0
(22) Anmeldetag: 14.10.1999
(51) Int. Cl.: H02G 3/04, A47B 21/00

(54) **BAUSATZ FÜR KABELKANÄLE EINES ABEITSPLATZ-MÖBELS**
ASSEMBLY FOR CABLE CONDUITS OF WORKSTATION FURNITURE
JEU DE PIECES POUR CONSTITUER DES CONDUITS DE CABLES D'UN MEUBLE DE BUREAU

(30) Priorität: 21.10.1998 DE 19848511
(43) Veröffentlichungstag der Anmeldung: 16.08.2001
(73) Patentinhaber: Otto Lampertz GmbH & Co. Kg., 57584 Wallmenroth (DE)
(72) Erfinder: JAUCH, Ala, D-91550 Dinkelsbühl (DE); SCHMIDT, Markus, D-57518 Betzdorf (DE); KAISER, Werner-Josef, D-57578 Elkenroth (DE)
(74) Vertreter: Fleck, Hermann-Josef, Dr.-Ing.
(86) Internationale Anmeldenummer: EP9907732
(87) Internationale Veröffentlichungsnummer: WO00024103

(56) Entgegenhaltungen:
- EP-A- 0 446 475
- EP-A- 0 767 521
- DE-C- 19 610 347

## Beschreibung

Die Erfindung betrifft einen Bausatz für Kabelkanäle eines Arbeitsplatz-Möbels, der aus mehreren unterschiedlichen, zusammensetzbaren Profilabschnitten besteht, an denen auf der Innen- und/oder Außenseite Verbindungselemente angeformt oder eingeformt sind.

Ein derartiger Bausatz ist aus der DE 196 10 347 C1 bekannt. Die auf der Innenseite angeformten Verbindungselemente sind Stege oder Nuten und dienen zur Befestigung von Kabeln und Einbauten. Zur Verbindung der Profilabschnitte zum Kabelkanal sind an den freien Längskanten der Profilabschnitte kompliziert gestaltete Verbindungs- und Gegenverbindungselemente angeformt. Die zusammengesteckten Kabelkanäle dienen in erster Linie als Horizontalkanäle, die stirnseitig mit vertikalen Säulen des Möbelgestelles verbindbar sind, und haben einen verhältnismäßig kleinen Aufnahmeraum.

Es ist Aufgabe der Erfindung, einen Bausatz der eingangs erwähnten Art zu schaffen, mit dem mit einfachen Verbindungselementen versehene Profilabschnitte schnell und einfach Kabelkanäle zusammengesetzt werden können, die an vertikalen Säulen des Möbelgestelles angebracht werden können.

Diese Aufgabe wird nach der Erfindung dadurch gelöst, dass der Bausatz drei verschiedene Profilabschnitte umfaßt:
a) Säulenanschluß-Profilabschnitte mit im wesentlichen U-förmigem Querschnitt, wobei der Basisschenkel auf der Außenseite als Säulenaufnahme ausgebildet ist, in die Außenseiten der Seitenschenkel Verbindungsnuten eingeformt sind und die Innenseite des Basisschenkels mit einer angeformten Befestigungsnut versehen ist,
b) Rückwand-Profilabschnitte mit im wesentlichen U-förmigem Querschnitt, wobei die Innenseite des Basisschenkels mit einer angeformten Befestigungsnut versehen ist und in die Außenseiten der Seitenschenkel Verbindungsnuten eingeformt sind, und
c) Verbindungs-Profilabschnitte mit im Wesentlichen mäanderförmigem Querschnitt zum Verbinden eines Säulen-Anschluß-Profilabschnittes mit einem Rückwand-Profilabschnitt, wobei auf der Innen- und Außenseite abwechselnd Aufnahmenuten gebildet sind und die Längskanten in Verbindungsansätze übergehen, die in die Verbindungsnuten der Säulenanschluß- und der Rückwand-Profilabschnitte einführbar und mit diesen verbindbar sind.

Mit dem Säulenanschluß-Profilteil wird mit der Säulenaufnahme eine großflächige Anbringung des Kabelkanals an der Säule erreicht, die sich über die gesamte Länge des Kabelkanals erstreckt. Die mit den Verbindungsnuten versehenen Rückwand-Profilabschnitte und Verbindungs-Profilabschnitte können leicht miteinander verbunden werden. Mit den Befestigungsnuten und Aufnahmenuten der Profilabschnitte werden Befestigungs- und Anbringungsmöglichkeiten für Einbauten, Steckerleisten und dgl. auf den Innen- und/oder Außenseiten des zusammengesetzten Kabelkanals geschaffen. Außerdem wird darüber auch das Anbringen von horizontalen Kabelkanälen an dem mit einer Säule verbundenen, vertikalen Kabelkanal erleichtert. Mit vier Profilabschnitten läßt sich ein geschlossener Kabelkanal zusammensetzen, der allen Anforderungen für den Einsatz in einem Arbeitsplatz-Möbel gerecht wird.

Nach einer bevorzugten Ausgestaltung ist vorgesehen, dass die Verbindungsnuten in den Seitenschenkeln der Säulenanschluß-Profilabschnitte und den Rückwand-Profilabschnitten T-förmigen Querschnitt aufweisen, sowie dass die an den Innenseiten der Säulenanschluß-Profilabschnitte und den Rückwand-Profilabschnitten sowie zumindest ein Teil der Aufnahmenuten der Verbindungs-Profilabschnitte T-förmigen Querschnitt aufweisen.

Ist vorgesehen, dass die Verbindungsansätze der Verbindungs-Profilabschnitte mit Bohrungen versehen und mittels Schrauben mit den Verbindungsnuten der Säulenanschluß-Profilabschnitte und der Rückwand-Profilabschnitte verschraubbar sind, dann können die aufeinander stoßenden Profilabschnitte auf einfache Art miteinander verschraubt werden und der Einbau von Einrichtungen in den Kabelkanal ist erleichtert.

Weitere Befestigungsmöglichkeiten werden dadurch geschaffen, dass in die Verbindungsnuten der Säulenanschluß-Profilabschnitte und der Rückwand-Profilabschnitte Rasterleisten mit einer Reihe von Schlitzen einschiebbar und unverlierbar darin gehalten sind, und dass in die Schlitze Einhängehaken einhängbar sind, die stirnseitig in Aufnahmenuten von senkrecht dazu stehenden Profilabschnitten eingesetzt sind, sowie dadurch, dass im Bereich der Ver-bindungsnuten der Säulenanschluß-Profilabschnitte und der Rückwand-Profilabschnitte im Inneneckbereich offene Schraubkanäle angeformt sind.

Anstelle eines zweiten Verbindungs-Profilabschnittes für den Kabelkanal kann auch vorgesehen sein, dass die Seitenschenkel der Säulenanschluß-Profilabschnitte und der Rückwand-Profilabschnitte in Anschlußaufnahmenuten auslaufen, die bündig mit den Außenseiten der Seitenschenkel abschließen und dass in die gegeneinander gerichteten Aufnahmenuten an den Enden der Seitenschenkel von Säulenanschluß-Profilabschnitt und Rückwand-Profilabschnitt eine flexible Abdeckung eingebracht und darin gehalten ist.

Eine formschlüssige Aufnahme der Säule in der Säulenaufnahme des Säulenanschluß-Profilabschnittes wird dadurch erreicht, dass die Säulenanschluß-Profilabschnitte auf den Außenseiten in den Endbereichen des Basisschenkels angeformte Hohlkammerstege aufweisen, die die Säulenaufnahme begrenzen, und dass die einander zugekehrten Seitenwände dieser Hohlkammerstege die Säulenaufnahme nach außen kontinuierlich verbreitern und mit gegeneinander gerichteten Haltestegen versehen sind. Mit den Haltestegen wird eine leichte Anbringungsmöglichkeit für den Kabelkanal an der Säule dadurch geschaffen, dass in die Säulenaufnahme Halteschieber einbringbar sind, die mit den Haltestegen gehalten sind und mit Hakenleisten in Schlitze der zugekehrten Seitenwände der Säule einhängbar sind. Dabei lassen sich in Längsrichtung mehrere Halteschieber verwenden. Von Vorteil ist dabei eine Ausgestaltung, die dadurch gekennzeichnet ist, dass die Halteschieber mittels Arretierschraube in der Säulenaufnahme unverschiebbar festlegbar sind. Die Haltestege der so festgelegten Halteschieber sind in der Teilung der Schlitze in der Säule angeordnet und positioniert, so dass der an der Säule eingehängte Kabelkanal an mehreren Stellen seiner Längsabmessung gehalten ist.

Die Erfindung wird anhand von in den Zeichnungen dargestellten Ausführungsbeispielen näher erläutert. Es zeigen:
- Fig. 1: im Querschnitt einen offenen Kabelkanal, der aus einem Säulenanschluß-Profilabschnitt, einem Rückwand-Profilabschnitt und einem Verbindungs-Profilabschnitt zusammengesetzt ist und
- Fig. 2: im Querschnitt einen an einer Säule befestigten Kabelkanal, der au einem Säulenanschluß-Profilabschnitt, einem Rückwand-Profilabschnitt, einem Verbindungs-Profilabschnitt und einer flexiblen Abdeckung als zweite Verbindung zwischen dem Säulenanschluß-Profilabschnitt und dem Rückwand-Profilabschnitt dient.

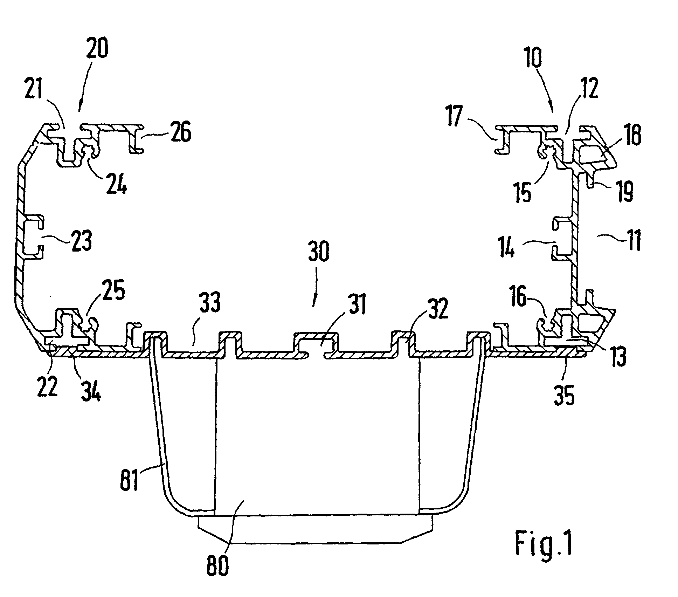

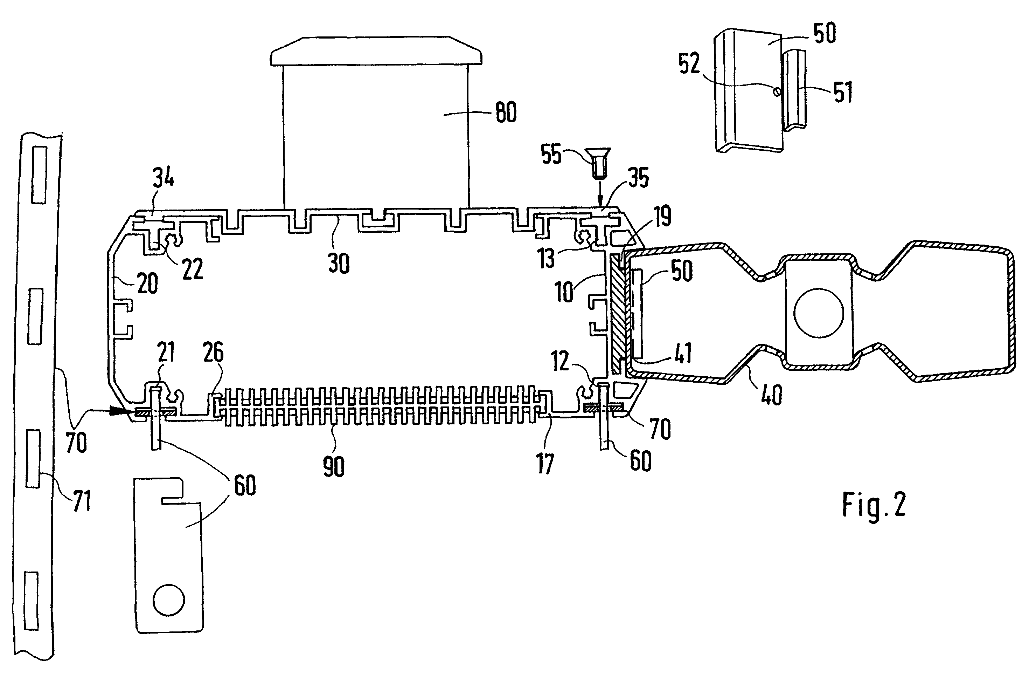

In Fig. 1 bilden ein im wesentlichen U-förmiger Säulenanschluß-Profilabschnitt 11 und ein im wesentlichen U-förmiger Rückwand-Profilabschnitt 20 die Seitenschenkel eines offenen, U-förmigen Kabelkanals. Ein Verbindungs-Profilabschnitt 30 bildet den Basisschenkel des Kabelkanals. Die Außenseite des Säulenanschluß-Profilabschnittes 10 ist mit den Hohlkammerstegen 18 eine Säulenaufnahme 11 mit angeformten Haltestegen 19, in die formschlüssig eine vertikale Säule 40 des Möbelgestelles eingeführt werden kann, wie Fig. 2 erkennen läßt. Zur Befestigung werden Halteschieber 50 verwendet, die hinter die Haltestege 19 eingeschoben und mit Arretierschrauben 52 positioniert werden können. Die der Säulenaufnahme 11 zugekehrte Seitenwand der Säule 40 trägt eine Reihe von horizontalen Schlitzen 41, in die die Hakenleisten 51 der Halteschieber 50 eingehängt werden können, wenn diese in der Teilung der Schlitze 41 an dem Säulenanschluß-Profilabschnitt 10 positioniert sind.

In die Außenseiten der Seitenschenkel der Säulenanschluß-Profilabschnitte 10 sind T-förmige Verbindungsnuten 12 und 13 eingeformt, in die Verbindungsansätze 34 und 35 eines Verbindungs-Profilabschnittes 30 einführbar und mit Schrauben 55 festschraubbar sind, wie Fig. 2 zeigt. In den Übergangsbereichen zwischen Basisschenkel und Seitenschenkel des Säulenanschluß-Profilabschnittes 10 sind an den die Verbindungsnuten 12 und 13 bildenden Profilteilen offene Schraubkanäle 15 und 16 angeformt, die insbesondere stirnseitig am Kabelkanal zusätzliche Verbindungsmöglichkeiten bieten.

Die Seitenschenkel des Säulenanschluß-Profilabschnittes 10 laufen in Aufnahmenuten 17 aus. Dasselbe gilt auch für die Seitenschenkel der im Wesentlichen U-förmigen Rückwand-Profilabschnitte 20 mit den Aufnahmenuten 26 und den eingeformten Verbindungsnuten 21 und 22. Die Verbindungsnut 22 nimmt in Fig. 1 den Verbindungsansatz 34 des Verbindungs-Profilabschnittes 30 auf. Die Übergänge von den Seitenschenkeln zu dem Basisschenkel des Rückwand-Profilabschnittes 20 sind abgeschrägt. Die Innenseite des Basisschenkels des Rückwand-Profilabschnittes 20 trägt eine angeformte Befestigungsnut 23, wie der Basisschenkel des Säulenanschluß-Profilabschnittes 10 mit der Befestigungsnut 14. Im Bereich der Übergänge von den Seitenschenkeln zum Basisschenkel des Rückwand-Profilabschnittes 20 sind offene Schraubkanäle 24 und 25 angeformt, die stirnseitig weitere Befestigungsmöglichkeiten bieten.

Die Verbindungs-Profilabschnitte 30 haben im Wesentlichen mäanderförmigen Querschnitt mit auf der Innen- und Außenseite abwechselnden Aufnahmenuten 31, 32 und 33, die zum Anbringen von Einbauten und Aufbauten, wie z.B. Steckerleisten 80 oder dgl. mit Abdeckung 81 verwendbar sind.

Wie Fig. 2 zeigt, kann die in Fig. 1 offene Seite des Kabelkanals mit einer flexiblen Abdeckung 90 verschlossen werden, die in die einander zugekehrten Aufnahmenuten 17 und 26 von Säulenanschluß-Profilabschnitt 10 und Rückwand-Profilabschnitt 20 eingesetzt ist. Diese flexiblen Abdeckungen können sich auch nur über Teilbereiche der Längsabmessung des Kabelkanals erstrecken, um so durch Zusammendrücken der Abdeckung an bestimmten Stellen des Kabelkanals Kabel ein- und/oder ausführen zu können. Die Verbindungsnuten 12 und 21 des Säulenanschluß-Profilabschnittes 10 und des Rückwand-Profilabschnittes 20 bleiben dabei frei, so dass sie Rasterleisten 70 mit einer Reihe von Schlitzen 71 aufnehmen können. In diese Schlitze 71 können Einhängehaken 60 eingehängt werden, die stirnseitig in Verbindungsnuten von Profilabschnitten eines horizontalen Kabelkanals eingesetzt sind. Auf diese Weise lassen sich horizontale Kabelkanäle ankoppeln, wobei die Teilung der Schlitze 71 in den Rasterleisten 70 die Ankoppelstellen festlegen.

Die drei unterschiedlichen Profilabschnitte - Säulenanschluß-, Rückwandund Verbindungs-Profilabschnitt - erlauben den Aufbau geschlossener und teilweise offener vertikale Kabelkanäle mit einer einfachen und eindeutigen Befestigungsmöglichkeit an einer vertikalen Säule 40 des Möbelgestelles. Darüber hinaus ist die Verbindung der Profilabschnitte untereinander einfach und schnell ausführbar. Der Kabelkanal bietet Anbringungs- und Befestigungsmöglichkeiten auf seinen Innen- und Außenseiten, wobei insbesondere die einfache Ankopplung von horizontalen Kabelkanälen ins Gewicht fällt, da dies gerade im Einsatz mit flexiblen Abdeckungen im Bereich der Koppelstellen die Kabelführung im Arbeitsplatz-Möbel entscheidend vereinfacht.

## Patentansprüche

1. Bausatz für Kabelkanäle eines Arbeitsplatz-Möbels, bestehend aus mehreren unterschiedlichen, zusammensteckbaren Profilabschnitten, an denen auf der Innen- und/oder Außenseite Verbindungselemente angeformt oder eingeformt sind,
**dadurch gekennzeichnet,**
**dass** er drei verschiedene Profilabschnitte umfaßt:
a) Säulenanschluß-Profilabschnitte (10) mit im Wesentlichen U-förmigem Querschnitt, wobei der Basisschenkel auf der Außenseite als Säulenaufnahme (11) ausgebildet ist, in die Außenseiten der Seitenschenkel Verbindungsnuten (12, 13) eingeformt sind und die Innenseite des Basisschenkels mit einer angeformten Befestigungsnut (14) versehen ist,
b) Rückwand-Profilabschnitte (20) mit im Wesentlichen U-förmigem Querschnitt, wobei die Innenseite des Basisschenkels mit einer angeformten Befestigungsnut (23) versehen ist und in die Außenseiten der Seitenschenkel Verbindungsnuten (21, 22) eingeformt sind, und
c) Verbindungs-Profilabschnitte (30) mit im Wesentlichen mäander-förmigem Querschnitt zum Verbinden des Säulen-Anschluß-Profilabschnittes (10) mit dem Rückwand-Profilabschnitt (20), wobei auf der Innen- und Außenseite abwechselnd Aufnahmenuten (31, 32, 33) gebildet sind und die Längskanten in Verbindungsansätze (34, 35) übergehen, die in die Verbindungsnuten (12,13; 21,22) der Säulenanschluß- und der Rückwand-Profilabschnitte (10, 20) einführbar und mit diesen verbindbar sind.

2. Bausatz nach Anspruch 1,
**dadurch gekennzeichnet,**
**dass** die Verbindungsnuten (12, 13, 21, 22) in den Seitenschenkeln der Säulenanschluß-Profilabschnitte (10) und den Rückwand-Profilabschnitten (20) T-förmigen Querschnitt aufweisen.

3. Bausatz nach Anspruch 1 oder 2,
**dadurch gekennzeichnet,**
**dass** die an den Innenseiten der Säulenanschluß-Profilabschnitte (10) und den Rückwand-Profilabschnitten (20) sowie zumindest ein Teil der Aufnahmenuten (31) der Verbindungs-Profilabschnitte (30) T-förmigen Querschnitt aufweisen.

4. Bausatz nach einem der Ansprüche 1 bis 3,
**dadurch gekennzeichnet,**
**dass** im Bereich der Verbindungsnuten (12,13; 21,22) der Säulenanschluß-Profilabschnitte (10) und der Rückwand-Profilabschnitte (20) im Inneneckbereich offene Schraubkanäle (15,16; 24,25) angeformt sind.

5. Bausatz nach einem der Ansprüche 1 bis 4,
**dadurch gekennzeichnet,**
**dass** die Seitenschenkel der Säulenanschluß-Profilabschnitte (10) und der Rückwand-Profilabschnitte (20) in Anschlußaufnahmenuten (17, 26) auslaufen, die bündig mit den Außenseiten der Seitenschenkel abschließen.

6. Bausatz nach einem der Ansprüche 1 bis 5,
**dadurch gekennzeichnet,**
**dass** die Übergänge vom Seitenschenkel zu den Seitenschenkeln der Rückwand-Profilabschnitte (20) abgeschrägt sind.

7. Bausatz nach einem der Ansprüche 1 bis 6,
**dadurch gekennzeichnet,**
**dass** die Säulenanschluß-Profilabschnitte (10) auf den Außenseiten in den Endbereichen des Basisschenkels angeformte Hohlkammerstege (18) aufweisen, die die Säulenaufnahme (11) begrenzen, und
**dass** die einander zugekehrten Seitenwände dieser Hohlkammerstege (18) die Säulenaufnahme (11) nach außen kontinuierlich verbreitern und mit gegeneinander gerichteten Haltestegen (19) versehen sind.

8. Bausatz nach einem der Ansprüche 1 bis 7,
**dadurch gekennzeichnet,**
**dass** in die Säulenaufnahme (11) Halteschieber (50) einbringbar sind, die mit den Haltestegen (19) gehalten sind und mit Hakenleisten (51) in Schlitze (41) der zugekehrten Seitenwände der Säule (40) einhängbar sind.

9. Bausatz nach Anspruch 8,
**dadurch gekennzeichnet,**
**dass** die Halteschieber (50) mittels Arretierschraube (52) in der Säulenaufnahme (11) unverschiebbar festlegbar sind.

10. Bausatz nach einem der Ansprüche 1 bis 9,
**dadurch gekennzeichnet,**
**dass** die Verbindungsansätze (34, 35) der Verbindungs-Profilabschnitte (30) mit Bohrungen versehen und mittels Schrauben (55) mit den Verbindungsnuten (13, 22) der Säulenanschluß-Profilabschnitte (10) und der Rückwand-Profilabschnitte (20) verschraubbar sind.

11. Bausatz nach einem der Ansprüche 1 bis 10,
**dadurch gekennzeichnet,**
**dass** in die Verbindungsnuten (12, 21) der Säulenanschluß-Profilabschnitte (10) und der Rückwand-Profilabschnitte (20) Rasterleisten (70) mit einer Reihe von Schlitzen (71) einschiebbar und unverlierbar darin gehalten sind, und
**dass** in die Schlitze Einhängehaken (60) einhängbar sind, die stirnseitig in Aufnahmenuten von senkrecht dazu stehenden Profilabschnitten eingesetzt sind.

12. Bausatz nach einem der Ansprüche 1 bis 11,
**dadurch gekennzeichnet,**
**dass** in die gegeneinander gerichteten Aufnahmenuten (17, 26) an den Enden der Seitenschenkel von Säulenanschluß-Profilabschnitt (10) und Rückwand-Profilabschnitt (20) eine flexible Abdeckung (90) eingebracht und darin gehalten ist.

13. Bausatz nach einem der Ansprüche 1 bis 12,
**dadurch gekennzeichnet,**
**dass** auf der Außen- und/oder Innenseite der Verbindungs-Profilabschnitte (30) sowie auf der Innenseite der Säulenanschluß- und Rückwand-Profilabschnitte (10 und 20) Steckerleisten (80), Geräteeinbaudosen und dgl. anbringbar sind.

## Claims

1. Structural assembly for cable ducts of a workstation, said assembly comprising a plurality of different, interconnectable profiled portions, on which connecting members are moulded or provided on the internal side and/or on the external side, **characterised in that** it includes three different profiled portions:
a) profiled column connecting portions (10) having a substantially U-shaped cross-section, the base member on the external side being in the form of a column receiver (11), connecting grooves (12, 13) being provided in the external sides of the lateral members, and the internal side of the base member being provided with a moulded mounting groove (14),
b) profiled rear wall portions (20) having a substantially U-shaped cross-section, the internal side of the base member being provided with a moulded mounting groove (23), and connecting grooves (21, 22) being provided in the external sides of the lateral members, and
c) profiled connecting portions (30) having a substantially serpentine-like cross-section for connecting the profiled column connecting portion (10) to the profiled rear wall portion (20), receiver grooves (31, 32, 33) being formed alternately on the internal side and on the external side, and the longitudinal edges extending into connecting extension members (34, 35), which are insertable into the connecting grooves (12,13; 21,22) of the profiled column connecting and rear wall portions (10, 20) and being connectable to said portions.

2. Structural assembly according to claim 1, **characterised in that** the connecting grooves (12, 13, 21, 22) in the lateral members of the profiled column connecting portions (10) and in the profiled rear wall portions (20) have a T-shaped cross-section.

3. Structural assembly according to claim 1 or 2, **characterised in that** the connecting grooves at the internal sides of the profiled column connecting portions (10) and at the profiled rear wall portions (20), as well as at least some of the receiver grooves (31) of the profiled connecting portions (30), have a T-shaped cross-section.

4. Structural assembly according to one of claims 1 to 3 **characterised in that** screw channels (15,16; 24,25), which are open in the internal corner region, are provided in the region of the connecting grooves (12,13; 21,22) of the profiled column connecting portions (10) and of the profiled rear wall portions (20).

5. Structural assembly according to one of claims 1 to 4, **characterised in that** the lateral members of the profiled column connecting portions (10) and of the profiled rear wall portions (20) extend into connecting receiver grooves (17, 26), which terminate flush with the external sides of the lateral members.

6. Structural member according to one of claims 1 to 5, **characterised in that** the transitions from the lateral member to the lateral members of the profiled rear wall portions (20) are chamfered.

7. Structural assembly according to one of claims 1 to 6, **characterised in that** the profiled column connecting portions (10) on the external sides have hollow chamber webs (18), which are provided in the end regions of the base member and define the column receiver (11), and **in that** the lateral walls of these hollow chamber webs (18), which face each other, widen the column receiver (11) continuously outwardly and are provided with retaining webs (19) which are orientated towards each other.

8. Structural assembly according to one of claims 1 to 7, **characterised in that** retaining slides (50) are insertable into the column receiver (11), said slides being retained by means of the retaining webs (19) and being mountable with hook bars (51) in slots (41) of the facing lateral walls of the column (40).

9. Structural assembly according to claim 8, **characterised in that** the retaining slides (50) are non-displaceably securable in the column receiver (11) by means of stop screw (52).

10. Structural assembly according to one of claims 1 to 9, **characterised in that** the connecting extension members (34, 35) of the profiled connecting portions (30) are provided with bores and are screw-connectable to the connecting grooves (13, 22) of the profiled column connecting portions (10) and of the profiled rear wall portions (20) by means of screws (55).

11. Structural assembly according to one of claims 1 to 10, **characterised in that** locking bars (70), having a row of slots (71) therein, are insertable into the connecting grooves (12, 21) of the profiled column connecting portions (10) and of the profiled rear wall portions (20) and are non-detachably retained therein, and **in that** retaining hooks (60) are mountable in the slots, which hooks are inserted into the front ends of receiver grooves of profiled portions which extend perpendicularly thereto.

12. Structural assembly according to claims 1 to 11, **characterised in that** a flexible cover (90) is inserted into the receiver grooves (17, 26), which are orientated towards each other, at the ends of the lateral members of the profiled column connecting portion (10) and profiled rear wall portion (20) and is retained therein.

13. Structural assembly according to one of claims 1 to 12, **characterised in that** plug boards (80), appliance installation sockets and the like are mountable on the external side and/or on the internal side of the profiled connecting portions (30) as well as on the internal side of the profiled column connecting and rear wall portions (10 and 20).

## Revendications

1. Jeu de pièces détachées pour des conduits de câbles d'un meuble de poste de travail constitué de plusieurs sections de profilé différentes enfichables ensemble, sur lesquelles sont façonnés ou moulés, sur les faces intérieure et/ou extérieure, des éléments de liaison,
**caractérisé en ce**
**qu'**il comprend trois sections de profilé différentes :
a) des sections de profilé d'assemblage de poteaux (10) à section transversale sensiblement en forme de U, la branche de base étant formée sur la face extérieure en tant que logement de poteau (11), des rainures de liaison (12, 13) étant formées dans les faces extérieures des branches latérales et la face intérieure de la branche de base étant munie d'une rainure de fixation (14) façonnée,
b) des sections de profilé de paroi arrière (20) à section transversale sensiblement en forme de U, la face intérieure de la branche de base étant munie d'une rainure de fixation (14) façonnée et des rainures de liaison (21, 22) étant moulées dans les faces extérieures des branches latérales, et
c) des sections de profilé de liaison (30) à section transversale sensiblement en forme de méandres pour la liaison de la section de profilé d'assemblage de poteaux (10) à la section de profilé de paroi arrière (20), des rainures de logement (31, 32, 33) étant formées alternativement sur les faces intérieure et extérieure et les arêtes longitudinales se transformant en saillies de liaison (34, 35) qui peuvent être introduites dans les rainures de liaison (12, 13; 21, 22) des sections de profilé d'assemblage de poteaux et des sections de profilé de paroi arrière (10, 20) et peuvent être reliées à celles-ci.

2. Jeu de pièces détachées selon la revendication 1,
**caractérisé en ce**
**que** les rainures de liaison (12, 13, 21, 22) dans les branches latérales des sections de profilé d'assemblage de poteaux (10) et des sections de profilé de paroi arrière (20) présentent une section transversale en forme de T.

3. Jeu de pièces détachées selon la revendication 1 ou 2,
**caractérisé en ce**
**que** les rainures de logement sur les faces intérieures des sections de profilé d'assemblage de poteaux (10) et des sections de profilé de paroi arrière (20) ainsi qu'au moins une partie des rainures de logement (31) des sections de profilé de liaison (30) présentent une section transversale en forme de T.

4. Jeu de pièces détachées selon l'une des revendications 1 à 3,
**caractérisé en ce**
**que** des canaux de vis (15, 16 ; 24, 25) ouverts sont formés dans la zone d'angle intérieur dans la zone des rainures de liaison (12, 13 ; 21, 22) des sections de profilé d'assemblage de poteaux (10) et des sections de profilé de paroi arrière (20).

5. Jeu de pièces détachées selon l'une des revendications 1 à 4,
**caractérisé en ce**
**que** les branches latérales des sections de profilé d'assemblage de poteaux (10) et des sections de profilé de paroi arrière (20) se terminent en rainures de réception d'assemblage (17, 26) qui s'arrêtent en affleurement avec les faces extérieures des branches latérales.

6. Jeu de pièces détachées selon l'une des revendications 1 à 5,
**caractérisé en ce**
**que** les transitions de la branche de base en les branches latérales des sections de paroi arrière (20) sont biseautées.

7. Jeu de pièces détachées selon l'une des revendications 1 à 6,
**caractérisé en ce**
**que** les sections de profilé d'assemblage de poteaux (10) présentent, sur les faces extérieures, des âmes à chambre creuse (18) façonnées dans les zones d'extrémité de la branche de base, qui délimitent le logement de poteau (11) et que les parois latérales tournées l'une vers l'autre de ces âmes à chambre creuse (18) élargissent continuellement vers l'extérieur le logement de poteau (11) et sont munies de nervures d'arrêt (19) dirigées l'une vers l'autre.

8. Jeu de pièces détachées selon l'une des revendications 1 à 7,
**caractérisé en ce**
**que**, dans le logement de poteau (11), peuvent être logés des coulisseaux de support (50) qui sont maintenus par les nervures d'arrêt (19) et peuvent être suspendus par des baguettes à crochet (51) dans des fentes (41) de la paroi latérale opposée du poteau (40).

9. Jeu de pièces détachées selon la revendication 8,
**caractérisé en ce**
**que** les coulisseaux de support (50) peuvent être fixés sans pouvoir coulisser dans le logement de poteau (11) au moyen de vis d'arrêt (52).

10. Jeu de pièces détachées selon l'une des revendications 1 à 9,
**caractérisé en ce**
**que** les saillies de liaison (34, 35) des sections de profilé de liaison (30) sont munies d'alésages et peuvent être vissées, au moyen de vis (55), aux rainures de liaison (13, 22) des sections de profilé d'assemblage de poteaux (10) et des sections de profilé de paroi arrière (20).

11. Jeu de pièces détachées selon l'une des revendications 1 à 10,
**caractérisé en ce**
**que** des baguettes de quadrillage (70) avec une rangée de fentes (71) peuvent être introduites en glissant dans les rainures de liaison (12, 21) des sections de profilé d'assemblage de poteaux (10) et des sections de profilé de paroi arrière (20) et être maintenues dedans de manière imperdable et
**que** des crochets de suspension (60), qui sont montés frontalement dans des rainures de logement de sections de profilé se trouvant orthogonales à celles-ci, peuvent être accrochés dans les fentes.

12. Jeu de pièces détachées selon l'une des revendications 1 à 11,
**caractérisé en ce**
**qu'**un recouvrement (90) flexible est monté dans les rainures de logement (17, 26) orientées l'une vers l'autre aux extrémités des branches latérales de la section de profilé d'assemblage de poteaux (10) et de la section de profilé de paroi arrière (20) et est maintenu dedans.

13. Jeu de pièces détachées selon l'une des revendications 1 à 12,
**caractérisé en ce**
**que** des baguettes de connecteur (80), des boîtes d'assemblage d'appareils et similaires peuvent être montées sur la face extérieure et/ou intérieure des sections de profilé de liaison (30) ainsi que sur la face intérieure des sections de profilé d'assemblage de poteaux et de paroi arrière (10 et 20).
